(19) Europäisches Patentamt / European Patent Office / Office européen des brevets

(11) **EP 2 937 467 B1**

(12) **EUROPEAN PATENT SPECIFICATION**

(45) Date of publication and mention
of the grant of the patent:
**22.03.2017 Bulletin 2017/12**

(51) Int Cl.:
*E02F 3/00* *(2006.01)*      *B60T 8/175* *(2006.01)*
*H02G 11/02* *(2006.01)*      *E02F 9/20* *(2006.01)*
*E21F 13/00* *(2006.01)*

(21) Application number: **14165366.7**

(22) Date of filing: **22.04.2014**

(54) **Anti-slip method and anti-slip system for an electric loader used particularly in mines and excavations and a mining loader**

Anti-Rutsch-Verfahren und Anti-Rutsch-System für ein elektrisches Arbeitsfahrzeug insbesondere zur Verwendung in Minen und bei Ausgrabungen und ein Bergbaulader

Procédé d'anti-dérapant et système anti-dérapage pour chargeuse électrique utilisé en particulier dans les mines et les excavations et chargeuse d'exploitation minière

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.10.2015 Bulletin 2015/44**

(73) Proprietor: **Sandvik Mining and Construction Oy**
**33330 Tampere (FI)**

(72) Inventor: **Lietonen, Jani**
**33330 Tampere (FI)**

(74) Representative: **Lyytinen, Veera Elise et al**
**Sandvik Mining and Construction Oy**
**Pihtisulunkatu 9**
**33330 Tampere (FI)**

(56) References cited:
**EP-A1- 0 008 352    DE-A1- 3 537 452**
**GB-A- 1 420 699**

## Description

Field of the invention

The invention relates to an anti-slip method and an anti-slip system intended to be used in an electric loader used particularly in mines and excavations. The invention relates also to a mining loader.

Background of the invention

An anti slip method and system, as defined in the preamble of claims 1 and 8 respectively, are generally known, see for example document DE -A- 35 37 452.

In mines and excavations, loaders are used for handling of rock, with the function of scooping rock material from a stack into the bucket of the loader so that the bucket is driven to the stack (a stack that contains rock material), and when a desired amount of rock material is in the bucket, the rock material is moved with the loader further to a tipping location where the rock material is then tipped from the bucket. Normally, the rock material is tipped onto the platform of load-carrying equipment, such as a mining truck, which load-carrying device carries the rock material further out of the mine for further processing. However, the rock material can also be tipped from the loader on *e.g.* an intermediate stack in the mine.

A problem particularly at the stack is the fact that the machine tends to slip, whereby the wheels are worn, and this is very undesirable because it reduces the service life of the wheels and increases the operating costs as the expensive wheels of the loader have to be replaced more frequently. Moreover, slippage at the stack also consumes productive working time, because the slippage does not in any way facilitate grabbing rock material into the bucket of the loader, and the slippage thus also consumes fuel and imposes an unnecessary load on the loader.

In the simplest way, the aim is to control slippage in such a way that when the driver of the mining machine detects slippage, he will brake the wheels of the loader by pressing the brake pedal and/or by reducing the moment acting on the wheels, for example by reducing the power supplied by the motor of the loader, by reducing the rotation speed of the motor. However, this is not a very functional nor effective way to prevent or control slippage because even a long time can be taken from the driver to detect the slippage and further to start the braking or to reduce the power of the machine (reducing the moment acting on the wheels, i.e reducing the torque). Moreover, it is obvious that the above mentioned method does not work in automated equipment, that is, equipment operated without a driver.

Furthermore, solutions are known in which the rotation speed or the rotation angle of the different wheels (front wheels/rear wheels) of the loader is measured, and the beginning of slippage is concluded from a difference in the rotation speeds or rotation angles. However, the functioning of this solution is not reliable or efficient for detecting slippage, if only for the reason that the slippage of one wheel does not necessarily positively indicate real slippage, and on the other hand, the solution is only applicable in loaders in which the shafts of the wheels rotate synchronically. Nevertheless, this is not the case in conventional loaders.

There is thus an obvious need and demand for anti-slip control which is intended for loaders used in a mine and which can be applied in an efficient, reliable and functional way to prevent slippage of the loader.

Summary of the invention

It is an aim of the present invention to provide a novel approach for anti-slip control in order to avoid the problems and drawbacks found in the state of the art.

The anti-slip method according to the invention is characterized by measuring the movement of the power supply cable in relation to the loader, and also measuring the movement of one or more wheels of the loader, or of the axle rotating the wheel, and converting the movement data obtained by measuring from the wheel or axle into movement data of the loader, and further comparing the measured movement of the power supply cable with the movement data of the loader obtained from the movement of the wheel or axle, and if the measured movement of the power supply cable and the movement data of the loader obtained by measuring from the wheel or axle differ from each other by more than a given predetermined limit value, limiting the moment that rotates the wheel.

An embodiment of the method according to the invention is characterized by measuring the winding speed of the power supply cable and also measuring the rotation speed of one or more wheels of the loader, or of the axle that rotates the wheel directly or via transmission, and converting the measured rotation speed further into the theoretical driving speed of the loader, and comparing the winding speed of the power supply cable with the theoretical driving speed measured from the rotation speed of the wheels or the axle of the loader, and if the winding speed and the theoretical driving speed measured from the wheel or the axle differ from each other by more than a given predetermined limit value, limiting the moment that rotates the wheel.

An embodiment of the method according to the invention is characterized by measuring the winding length of the power supply cable and also measuring the rotation angle of one or more wheels of the loader, or of the axle that rotates the wheel directly or via transmission, and converting the measured rotation angle further into the theoretical travel distance of the loader, and comparing the winding length of the power supply cable with the theoretical travel distance of the loader, and if the winding length and the theoretical travel distance measured from the wheel or the axle differ from each other by more than a given predetermined limit value, limiting the moment that rotates the wheel.

An embodiment of the method according to the invention is characterized in that when measuring the winding speed or the winding length, an angle sensor is used as a measurement means in connection with the reel.

An embodiment of the method according to the invention is characterized in that the moment that rotates the wheels is limited by limiting the rotation speed of the electric motor that rotates the wheels directly or indirectly.

An embodiment of the method according to the invention is characterized in that the moment that rotates the wheels is limited by applying an inverter to limit the power that is supplied to the electric motor that rotates the wheels of the loader.

An embodiment of the method according to the invention is characterized in that the moment that rotates the wheels is limited by brakes that decelerate the wheels of the loader.

An embodiment of the method according to the invention is characterized in that the moment that rotates the wheels is only limited when the loader is at a stack, that is, when the loader is loading rock material.

An embodiment of the method according to the invention is characterized in that the anti-slip method is used in a loader which is a mining loader.

An embodiment according to the method of the invention is characterized in that the moment is limited by means of the control system of the loader.

An embodiment according to the method of the invention is characterized in that the moment is limited automatically.

An embodiment according to the method of the invention is characterized in that the moment is limited manually.

The anti-slip system according to the invention is characterized in that the anti-slip system comprises means for measuring the movement of the power supply cable in relation to the loader, and also for measuring the movement of one or more wheels of the loader, or of the axle rotating the wheel, and converting it into movement data of the loader, and further that the measured movement of the power supply cable can be compared with the movement data of the loader obtained from the movement of the wheel or axle, and if the measured movement of the power supply cable and the movement data of the loader obtained by measuring from the wheel or axle differ from each other by more than a given predetermined limit value, the moment that rotates the wheel can be limited.

An embodiment of the system according to the invention is characterized in that with the means intended for obtaining the movement data, the rotation speed of one or more wheels or the axle that rotates the wheel directly or via transmission, such as the propeller shaft, can be measured and converted into the theoretical driving speed of the loader, and that the winding speed of the power supply cable in the loader can be measured by at least one means suitable for measuring the winding speed, and that if the winding speed and the theoretical driving speed, or the winding length and the theoretical travel distance differ by more than a given predetermined limit value, the moment (M) that rotates the wheel can be limited, for preventing slippage, by the control system of the loader.

An embodiment of the system according to the invention is characterized in that using the means intended for obtaining the movement data, the angle rotated by one or more wheels, or by the axle that rotates the wheel directly or via transmission, can be measured and converted further into the theoretical travel distance of the loader, and that the winding length of the power supply cable can be compared with the theoretical travel distance of the loader measured from the wheel or the axle of the loader, and if the winding length and the theoretical travel distance measured from the wheel or the axle differ from each other by more than a given predetermined limit value, the moment that rotates the wheel can be limited.

An embodiment of the system according to the invention is characterized in that the means used for measuring the winding speed or the winding length is an angle sensor in connection with the reel.

An embodiment of the system according to the invention is characterized in that the winding speed of the power supply cable and the theoretical driving speed of the loader can be measured, for calculating their difference, for a desired period of time, such as for example 0.5 s.

An embodiment of the system according to the invention is characterized in that the moment that rotates the wheels by means of the control system can be limited by limiting the rotation speed of the electronic motor that rotates the wheels, or by applying an inverter to limit the power to be supplied to the electric motor that rotates the wheels of the loader, or by applying the brakes of the loader to limit the moment that rotates the wheels.

An embodiment according to the system of the invention is characterized in that the moment can be limited by means of the control system of the loader.

An embodiment according to the system of the invention is characterized in that the moment can be limited automatically.

An embodiment according to the system of the invention is characterized in that the moment can be limited manually.

An embodiment according to the system of the invention is characterized in that the anti-slip system is provided in a underground mining loader.

Now, an improved approach has been developed for preventing a loader from slipping.

The present invention provides several advantages which become more apparent in the detailed description.

The method according to the invention provides a solution, by which an electric loader can be effectively and reliably prevented from slipping, particularly when the loader is placed at a stack and is loading rock in its bucket. Beginning of slippage can be quickly detected, and the moment that rotates the wheels can be effectively limited after detecting the slippage. The service life of the wheels can be significantly increased, because slippage no longer occurs at all, or it occurs to a significantly lesser extent than at present. Moreover, energy consumed by the loader can be saved because slippage can be minimized. The working time that was previously consumed by slippage can now be used efficiently for working; in other words, the operation of the loader can be made more efficient by anti-slip control.

Brief description of the figures

Some embodiments of the invention will now be described in more detail in connection with some preferred embodiments, with reference to the accompanying drawings 1 to 3, in which:

Fig. 1 shows an electric loader in a perspective view.
Figure 2 illustrates the power transmission of an electric loader and a reel in the loader.
Figure 2a shows the measurement of the winding speed, measured by means of the rotation speed of the reel and the radius of a cable coil on the reel.
Figure 3 shows a situation of no slippage and a situation of slippage.

Detailed description of an embodiment of the invention with reference to the drawings

The markings listed below will be utilized in the description of the invention and in the figures.

$i$ = transmission ratio of the gearbox
$r_{cable(coil)\ on\ the\ reel}$ = $r$ = diameter of the cable coil on the reel
$M$ = moment (i.e torque) to be transmitted to the wheels
$R$ = radius of the wheel
$\omega_{wheel}$ = rotation speed of the wheel
$\omega_{axle}$ = rotation speed of the axle (the axle that rotates the wheel or the power transmission shaft, such as a propelling shaft)
$\omega_{reel}$ = rotation speed of the reel
$\omega_{wheel}$, = angle of rotation of the wheel
$\varphi_{axle}$ = angle of rotation of the axle
$\varphi_{reel}$, = angle of rotation of the reel
$v_{teor}$ = theoretical speed of the loader
$v_{reel}$ = winding speed of the power cable
$s_{teor}$ = theoretical travel distance of the loader
$s_{reel}$ = winding length
$C, D$ = ratios of rotation speeds of the reel and the wheel
$S$ = ratio of relative slippage = $D/C$
$K$ = determined limit value for limiting slippage (slippage is limited when $S \geq K$)

Some formulas used when describing the invention:

$$i = \frac{\omega_{axle}}{\omega_{wheel}} = constant$$

$$v_{teor} = \omega_{reel} \times r = \frac{\omega_{axle}}{i} \times R = \omega_{wheel} \times R$$

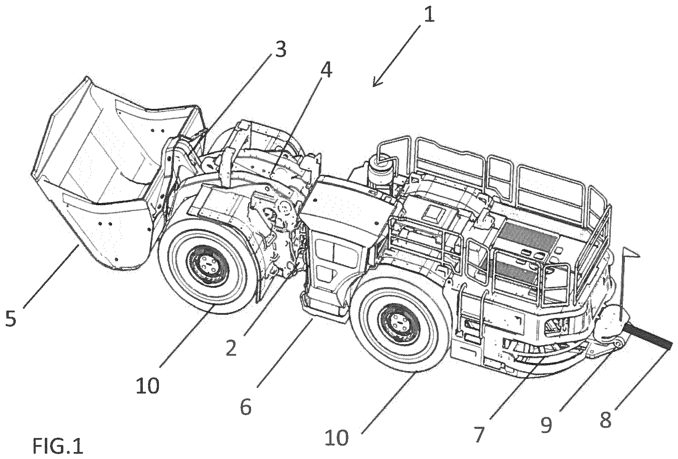

Figure 1 shows a perspective view of an electric loader 1 for use in mines. As shown in the figure, the loader is usually frame steered; that is, it comprises a centre articulation 2 which enables the swivelling of a front frame 4 and a rear frame 6 with respect to each other. A boom mechanism 3 is mounted on the front frame 4, and a bucket 5 is fastened to the boom mechanism, for loading rock material. The rear frame 6 of the loader is equipped with a rotatable reel 7, on which the power supply cable 8 of the loader can be wound up. At its other end, the power supply cable is fixed to an electric power distribution cabinet that is normally provided in a mine, but this fixing is not shown in the figure.

The rear frame of the loader also comprises a guide piece 9 for guiding the winding or unwinding of the power supply cable onto or from the reel 7. The reel 7 can be rotated by means of an actuator, such as a hydraulic actuator (a hydraulic motor) or an electric motor, but for the sake of clarity this is not shown in the figure. The function of the actuator is to rotate and/or to slow down the rotation of the reel so that the power cable is kept as tight as desired or, in other words, tensioned when the loader is moving, so that the cable is wound up or unwound at a suitable speed without becoming too slack.

According to the figure, the wheels 10 mounted on the rear frame 6 and the front frame 4 of the loader are identical in diameter, but it is feasible that they are possibly different in size, depending on the application.

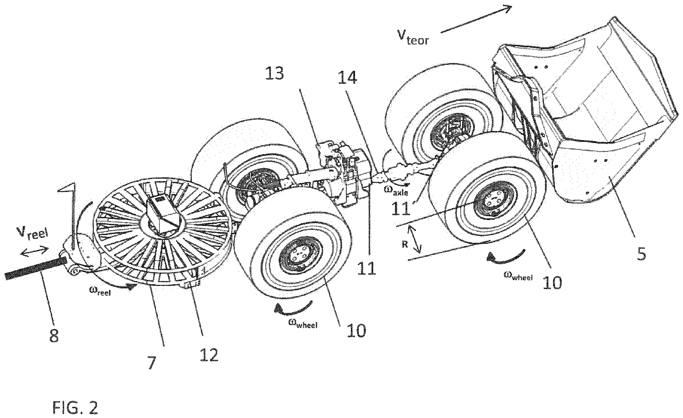

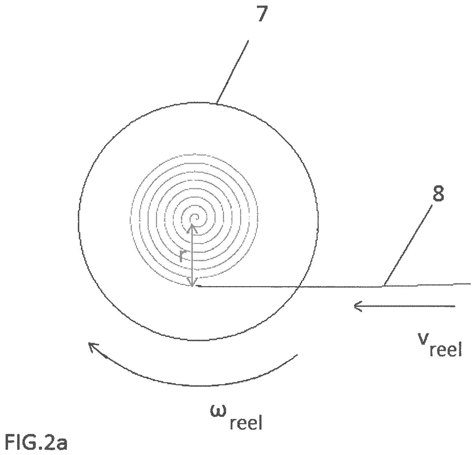

As shown in Fig. 2, the anti-slip system according to the invention comprises means 11, 11' (means for measuring movement data) provided in the loader, whereby the rotation speed $\omega_{wheel}$ of one or more wheels of the loader (wheel radius = R), or the rotation speed $\omega_{axle}$ of the axle 14 (for example, the propeller shaft or the shaft of the wheels) that rotates the wheel 10 directly or via the power transmission 13), or alternatively the angles $\varphi_{wheel}$, $\varphi_{axle}$ of rotation of the wheel 10 and the axle 14 can be measured and converted into the theoretical driving speed $v_{teor}$ or theoretical travel distance $s_{teor}$ of the loader, and further the winding speed $v_{reel}$ and/or winding length $s_{reel}$ of the power supply cable 8 (*i.e.* the length that the power supply cable has been wound up) in the loader can be measured by at least one measurement means 12, such as an angle sensor, in the loader. Because the measurement means in connection with the reel is used for continuous measurement of the rotation of the reel (the winding length $s_{reel}$), it is also known how much power supply cable is on the reel at each time (this is illustrated in more detail in Fig. 2a).

With reference to Fig. 2a, and because the diameter of the power supply cable is known, it is possible to calculate the radius r of the cable coil wound up on the reel at each time with sufficient accuracy. From this, it is possible to calculate, with sufficient accuracy, the speed of the loader (which is equal to the winding speed) by means of the rotation speed $\omega_{reel}$ of the reel and the radius r ($r=r_{cable(coil) on the reel}$) of the cable coil on the reel, by the formula $v_{reel} = \omega_{reel}*r_{cable(coil) on the reel}$. It is now possible to compare the speed $v_{reel}$ obtained from the wheels or the axles with the theoretical driving speed $v_{teor}$ obtained by measurement, and if the winding speed $v_{reel}$ and the theoretical driving speed $v_{teor}$, on one hand, or the winding length $s_{reel}$ and the theoretical travel distance $s_{teor}$ of the loader, on the other hand, differ from each other by more than a given predetermined limit value, which limit value can be even very small, it can thus be assumed that there is a situation of slippage; that is, the wheels 10 are spinning. Thus, to prevent slippage, the moment M (i.e the torque) that rotates the wheels can be limited, for example, automatically by means of the control system of the loader; however, the control system is not shown in the figure. In the case of manned mining equipment, the limiting can be performed manually, for example by means of brakes, by braking for a sufficient time, to regain grip. The loader may also be equipped with means for indicating slippage, for example by light signals or acoustic signals, or warning signals lit on a display in the cabin of the loader.

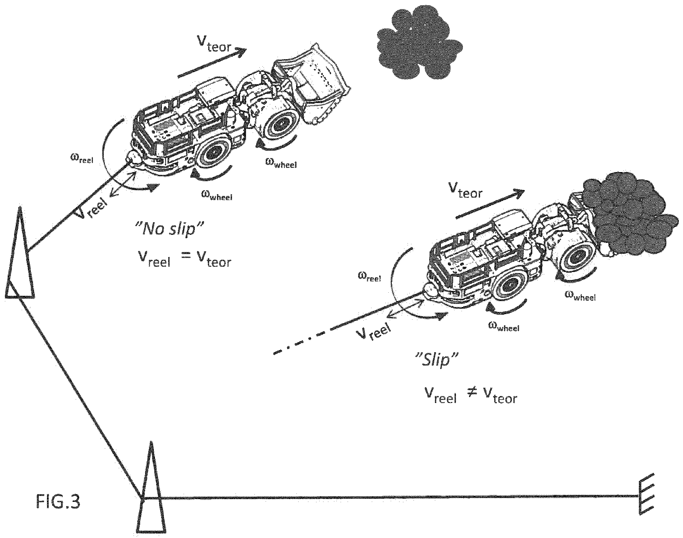

Figure 3 shows two situations, namely a situation in which no slippage occurs, and a situation in which slippage occurs. In the situation shown on top, there is no slippage (in the figure, the equipment is approaching a stack), and the situation shown lower is a situation of slippage (the equipment is at a stack and slippage takes place). In Fig. 3, the cable is shown to pass through two bend points, but the cable can also pass to the loader without bending, for example in a straight mine gallery. However, the bending as such does not affect the operation of the anti-slip system.

To detect slippage, the winding speed $v_{reel}$ of the power supply cable is compared with the theoretical driving speed $v_{teor}$ obtained from the rotation speed of the wheels of the loader or from the axle (power transmission axle, such as the propeller shaft), and if the winding speed and the theoretical driving speed measured from the wheels or the power transmission axle differ from each other by more than a given predetermined limit value, the moment M that rotates the wheels is limited.

As an alternative to the above described measurement of the winding speed, it is possible to compare the measured winding length $s_{reel}$ of the power supply cable with the theoretical travel distance $s_{teor}$ of the loader, measured from the rotation speed of the wheels or the (propeller) axle of the loader, and if the winding length and the theoretical travel distance measured from the wheels or the axle differ from each other by more than a given predetermined limit value, the moment that rotates the wheels is limited.

In a situation where no slippage occurs, the winding speed should be (notwithstanding a given error margin) equal to the theoretical speed of the loader, that is, $v_{reel} = v_{teor} = \omega_{reel} * r_{cable(coil) on the reel} = C* \omega_{reel}$. The figure C interconnects the rotation speed of the reel and the rotation speed of the wheels, because $C = R/ r_{cable(coil) on the reel}$; in other words, it represents the radius of the wheel of the loader in relation to the radius of the power cable coil wound up on the reel at each time. The radius of the power cable coil is variable; in other words, $r_{cable(coil) on the reel}$ is not constant but it varies according to the length of the power cable wound up on the reel at each moment of time. Thus, C is not constant either.

In a situation in which slippage occurs, the winding speed $v_{reel}$ differs from the measured theoretical speed $v_{teor}$ of the loader; that is, on the other hand, $\omega_{reel} \neq C * \omega_{wheel}$ in this case. Thus, with another ratio deviating from C, such as with a ratio D, it is possible to fulfill an equation in which the theoretical speed of the loader is the winding speed; that is, $\omega_{reel} = D * \omega_{weel}$. Now, we can further calculate the mutual ratio D/C between the ratios D and C, and this can be named ratio S; that is, S =D/C. The ratio S thus represents the relative value of the slippage, that is, the magnitude of slippage. In advance, such a value has been defined for the ratio S that if S exceeds this value (the value can be denoted with *e.g.* K), the anti-slip system is activated and measures are taken to start limiting the moment; in other words when S≥K, measures are taken to start limiting the moment, to prevent slippage. K can be a predetermined value, but it is feasible that K can also be calculated during the operation of the loader; in other words, the loader is equipped with a data processing unit that computes a value for K.

In a way similar to that presented above, the occurrence of slippage can also be determined by comparing the winding length of the power supply cable with the theoretical travel distance of the loader measured from the wheels or the axles, and if these differ from each other by more than a given predetermined value K, measures are taken to start limiting the moment, to prevent slippage.

It will be obvious for a person skilled in the art that with advances in technology, the basic idea of the invention can be implemented in a variety of ways. Thus, the invention and its embodiments are not limited to the above-described examples but they may vary within the scope of the claims. Consequently, various features can be omitted, modified, or replaced with equivalents, and features presented in this application can be combined to provide various combinations.

The solution according to the invention is also applicable in equipment used outside mines and excavations; consequently, the application of the invention is not limited to equipment used in mines/excavations only.

In the solution according to the invention, the winding speed of the power supply cable and the theoretical driving speed of the loader can be measured, for calculating their difference, during a desired period of time $\Delta t$, such as, for example, 0.5s.

**Claims**

1. An anti-slip method for an electric loader, which loader is used particularly in mines and excavations and in which the loader intended for the handling of rock material is equipped with a power supply cable for supplying power from an electric power network, such as an electric power network provided in a mine, to the loader, and which power supply cable is mounted on a reel in the loader,
**characterized by**
measuring the movement of the power supply cable in relation to the loader, and also measuring the movement of one or more wheels of the loader, or of the axle rotating the wheel, and converting the movement data obtained by measuring from the wheel or axle into movement data of the loader, and further comparing the measured movement of the power supply cable with the movement data of the loader obtained from the movement of the wheel or axle, and if the measured movement of the power supply cable and the movement data of the loader obtained by measuring from the wheel or axle differ from each other by more than a given predetermined limit value, limiting the moment (M) that rotates the wheel.

2. The method according to claim 1, **characterized by** measuring the winding speed of the power supply cable and also measuring the rotation speed ($\omega_{axle}$) of one or more wheels of the loader, or of the axle that rotates the wheel directly or via transmission, and converting the measured rotation speed further into the theoretical driving speed ($v_{teor}$) of the loader, and comparing the winding speed ($v_{reel}$) of the power supply cable with the theoretical driving speed ($v_{teor}$) measured from the rotation speed of the wheels or the axle of the loader, and if the winding speed and the theoretical driving speed measured from the wheel or the axle differ from each other by more than a given predetermined limit value, limiting the moment (M) that rotates the wheel.

3. The method according to claim 1 or 2, **characterized by** measuring the winding length ($s_{reel}$) of the power supply cable and also measuring the rotation angle ($\varphi_{axle}$) of one or more wheels of the loader, or of the axle that rotates the wheel directly or via transmission, and converting the measured rotation angle further into the theoretical travel distance ($s_{teor}$) of the loader, and comparing the winding length ($s_{reel}$) of the power supply cable with the theoretical travel distance ($s_{teor}$), and if the winding length and the theoretical travel distance measured from the wheel or the axle differ from each other by more than a given predetermined limit value, limiting the moment (M) that rotates the wheel.

4. The anti-slip method according to any of the preceding claims, **characterized in that** when measuring the winding speed or the winding length, the measurement means used is an angle sensor in connection with the reel.

5. The anti-slip method according to any of the preceding claims, **characterized in that** the moment that rotates the wheels is limited by limiting the rotation speed of the electric motor that rotates the wheels directly or indirectly.

6. The anti-slip method according to any of the preceding claims, **characterized in that** the moment that rotates the wheels is limited by applying an inverter to limit the power supplied to the electric motor that rotates the wheels of the loader.

7. The anti-slip method according to any of the preceding claims, **characterized in that** the moment that rotates the wheels is limited by brakes that decelerate the wheels of the loader.

8. An anti-slip system, which anti-slip system is arranged for a loader (1) which is used particularly in mines and excavations and which is supplied with power from an electric power network by means of a power supply cable (8) which can be wound on a reel (7) in the loader,
**characterized in that**
the anti-slip system comprises means (11, 11') for measuring the movement of the power supply cable in relation to the loader, and also for measuring the movement of one or more wheels of the loader, or of the axle rotating the wheel, and converting it into movement data of the loader, and further that the measured movement of the power supply cable can be compared with the movement data of the loader obtained from the movement of the wheel or axle, and if the measured movement of the power supply cable and the movement data of the loader obtained by measuring from the wheel or axle differ from each other by more than a given predetermined limit value, the moment (M) that rotates the wheel can be limited.

9. The anti-slip system according to claim 8, **characterized in that** with the means intended for obtaining the movement data, the rotation speed ($\omega_{axle}$) of one or more wheels, or of the axle that rotates the wheel directly or via transmission, can be measured and converted into the theoretical driving speed ($v_{teor}$) of the loader, and that the winding speed ($v_{reel}$) of the power supply cable in the loader can be measured by at least one means suitable for measuring the winding speed, and that if the winding speed and the theoretical driving speed, or the winding length and the theoretical travel distance, differ by more than a given predetermined limit value, the moment (M) that rotates the wheel can be limited by the control system of the loader, for preventing slippage.

10. The anti-slip system according to any of the preceding claims 8 or 9, **characterized in that** using the means intended for obtaining the movement data, the angle ($\varphi_{axle}$) rotated by one or more wheels, or by the axle that rotates the wheel directly or via transmission, can be measured and converted further into the theoretical travel distance ($s_{teor}$) of the loader, and that the winding length ($s_{reel}$) of the power supply cable can be compared with the theoretical travel distance of the loader measured from the wheel or the axle of the loader, and if the winding length and the theoretical travel distance ($s_{teor}$) measured from the wheel or the axle differ from each other by more than a given predetermined limit value, the moment (M) that rotates the wheel can be limited.

11. The anti-slip system according to any of the preceding claims 8-10, **characterized in that** the means used for measuring the winding speed or the winding length is an angle sensor in connection with the reel.

12. The anti-slip system according to any of the preceding claims 8-11, **characterized in that** the winding speed of the power supply cable and the theoretical driving speed of the loader can be measured, for calculating their difference, during a desired period of time $\Delta t$, such as, for example, 0.5s.

13. The anti-slip system according to any of the preceding claims 8-12, **characterized in that** the moment that rotates the wheels by means of the control system can be limited by limiting the rotation speed of the electronic motor that rotates the wheels, or by applying an inverter to limit the power to be supplied to the electric motor that rotates the wheels of the loader, or by applying brakes to limit the moment that rotates the wheels.

14. The anti-slip system according to any of the preceding claims 8-13, **characterized in that** the moment can be limited by means of the control system of the loader.

15. A mining loader, **comprising** an anti-slip system according to any one of preceding claims 8-14.

**Patentansprüche**

1. Ein Anti-Rutsch-Verfahren für ein elektrisches Ladefahrzeug, welches Ladefahrzeug insbesondere in Minen und Ausgrabungen verwendet wird und wobei das Ladefahrzeug, das für den Umschlag von Steinmaterial vorgesehen ist, mit einem Stromversorgungskabel ausgestattet ist, um das Ladefahrzeug mit Strom von einem elektrischen Stromnetz, wie etwa einem in einer Mine bereitgestellten elektrischen Stromnetz, zu versorgen, und welches Stromversorgungskabel an einer Trommel in dem Ladefahrzeug montiert ist,
**gekennzeichnet durch**
Messen der Bewegung von dem Stromversorgungskabel in Bezug auf das Ladefahrzeug und auch Messen der Bewegung von einer oder mehreren Trommeln von dem Ladefahrzeug oder von der die Trommel drehenden Achse und Umwandeln der **durch** Messen von der Trommel oder Achse erhaltenen Bewegungsdaten in Bewegungsdaten von dem Ladefahrzeug und weiter Vergleichen der gemessenen Bewegung von dem Stromversorgungskabel mit den von der Bewegung von der Trommel oder Achse erhaltenen Bewegungsdaten von dem Ladefahrzeug und, wenn sich die gemessene Bewegung von dem Stromversorgungskabel und die durch Messen von der Trommel oder Achse erhaltenen Bewegungsdaten von dem Ladefahrzeug um mehr als einen gegebenen vorbestimmten Grenzwert unterscheiden, Begrenzen des Moments (M), das die Trommel dreht.

2. Das Verfahren nach Anspruch 1, **gekennzeichnet durch** Messen der Wickelgeschwindigkeit von dem Stromversorgungskabel und auch Messen der Drehgeschwindigkeit ($\omega_{Achse}$) von einer oder mehreren Trommeln von dem Ladefahrzeug oder von der Achse, die die Trommel direkt oder über ein Getriebe dreht, und Umwandeln der gemessenen Drehgeschwindigkeit weiter in die theoretische Fahrgeschwindigkeit ($v_{theor}$) von dem Ladefahrzeug und Vergleichen der Wickelgeschwindigkeit ($v_{Trommel}$) von dem Stromversorgungskabel mit der theoretischen Fahrgeschwindigkeit ($v_{theor}$) gemessen aus der Drehgeschwindigkeit von den Trommeln oder der Achse von dem Ladefahrzeug und, wenn sich die Wickelgeschwindigkeit und die theoretische Fahrgeschwindigkeit gemessen von der Trommel oder der Achse um mehr als einen gegebenen vorbestimmten Grenzwert unterscheiden, Begrenzen des Moments (M), das die Trommel dreht.

3. Das Verfahren nach Anspruch 1 oder 2, **gekennzeichnet durch** Messen der Wickellänge ($s_{Trommel}$) von dem Stromversorgungskabel und auch Messen des Drehwinkels ($\phi_{Achse}$) von einer oder mehreren Trommeln von dem Ladefahrzeug oder von der Achse, die die Trommel direkt oder über ein Getriebe dreht, und Umwandeln des gemessenen Drehwinkels weiter in die theoretische Fahrtstrecke ($s_{theor}$) von dem Ladefahrzeug und Vergleichen der Wickellänge ($s_{Trommel}$) von dem Stromversorgungskabel mit der theoretischen Fahrtstrecke ($s_{theor}$) und, wenn sich die Wickellänge und die theoretische Fahrtstrecke gemessen von der Trommel oder der Achse um mehr als einen gegebenen vorbestimmten Grenzwert unterscheiden, Begrenzen des Moments (M), das die Trommel dreht.

4. Das Anti-Rutsch-Verfahren nach einem der vorhergehenden Ansprüche, **dadurch gekennzeichnet, dass** das bei einem Messen der Wickelgeschwindigkeit oder der Wickellänge verwendete Messmittel ein Winkelsensor in Verbindung mit der Trommel ist.

5. Das Anti-Rutsch-Verfahren nach einem der vorhergehenden Ansprüche, **dadurch gekennzeichnet, dass** das Moment, das die Trommeln dreht, begrenzt wird, indem die Drehgeschwindigkeit von dem Elektromotor begrenzt wird, der die Trommeln direkt oder indirekt dreht.

6. Das Anti-Rutsch-Verfahren nach einem der vorhergehenden Ansprüche, **dadurch gekennzeichnet, dass** das Moment, das die Trommeln dreht, begrenzt wird, indem ein Wechselrichter verwendet wird, um den Strom zu begrenzen, mit dem der Elektromotor versorgt wird, der die Trommeln von dem Ladefahrzeug dreht.

7. Das Anti-Rutsch-Verfahren nach einem der vorhergehenden Ansprüche, **dadurch gekennzeichnet, dass** das Moment, das die Trommeln dreht, durch Bremsen begrenzt wird, die die Trommeln von dem Ladefahrzeug abbremsen.

8. Ein Anti-Rutsch-System, welches Anti-Rutsch-System für ein Ladefahrzeug (1) eingerichtet ist, welches insbesondere in Minen und Ausgrabungen verwendet wird und welches mittels eines Stromversorgungskabels (8), das auf eine Trommel (7) in dem Ladefahrzeug gewickelt werden kann, mit Strom von einem elektrischen Stromnetz versorgt wird,
**dadurch gekennzeichnet, dass**
das Anti-Rutsch-System Mittel (11, 11') aufweist, um die Bewegung von dem Stromversorgungskabel in Bezug auf das Ladefahrzeug zu messen, und auch, um die Bewegung von einer oder mehreren Trommeln von dem Ladefahrzeug oder von der Achse, die die Trommel dreht, zu messen, und sie in Bewegungsdaten von dem Ladefahrzeug umzuwandeln, und weiter, dass die gemessene Bewegung von dem Stromversorgungskabel mit den aus der Bewegung von der Trommel oder Achse erhaltenen Bewegungsdaten von dem Ladefahrzeug verglichen werden können und, wenn sich die gemessene Bewegung von dem Stromversorgungskabel und die durch Messen von der Trommel oder Achse erhaltenen Bewegungsdaten von dem Ladefahrzeug um mehr als einen gegebenen vordefinierten Grenzwert unterscheiden, das Moment (M), das die Trommel dreht, begrenzt werden kann.

9. Das Anti-Rutsch-System nach Anspruch 8, **dadurch gekennzeichnet, dass** mit dem Mittel, das zum Erhalten der Bewegungsdaten vorgesehen ist, die Drehgeschwindigkeit ($\omega_{Achse}$) von einer oder mehreren Trommeln oder von der Achse, die die Trommel direkt oder über ein Getriebe dreht, gemessen und in die theoretische Fahrgeschwindigkeit ($v_{theor}$) von dem Ladefahrzeug umgewandelt werden kann und dass die Wickelgeschwindigkeit ($v_{Trommel}$) von dem Stromversorgungskabel in dem Ladefahrzeug durch mindestens ein Mittel gemessen werden kann, das zum Messen der Wickelgeschwindigkeit geeignet ist, und dass, wenn sich die Wickelgeschwindigkeit und die theoretische Fahrgeschwindigkeit oder die Wickellänge und die theoretische Fahrtstrecke um mehr als einen gegebenen vorbestimmten Grenzwert unterscheiden, das Moment (M), das die Trommel dreht, durch das Steuersystem von dem Ladefahrzeug begrenzt werden kann, um ein Rutschen zu verhindern.

10. Das Anti-Rutsch-System nach einem der vorhergehenden Ansprüche 8 oder 9, **dadurch gekennzeichnet, dass** durch ein Verwenden des Mittels, das zum Erhalten der Bewegungsdaten vorgesehen ist, der Winkel ($\phi_{Achse}$) gedreht durch eine oder mehrere Trommeln oder durch die Achse, die die Trommel direkt oder über ein Getriebe dreht, gemessen und weiter in die theoretische Fahrtstrecke ($s_{theor}$) von dem Ladefahrzeug umgewandelt werden kann und dass die Wickellänge ($s_{Trommel}$) von dem Stromversorgungskabel mit der theoretischen Fahrtstrecke von dem Ladefahrzeug gemessen von der Trommel oder der Achse von dem Ladefahrzeug verglichen werden kann und, wenn sich die Wickellänge und die theoretische Fahrtstrecke ($s_{theor}$) gemessen von der Trommel oder der Achse um mehr als einen gegebenen vorbestimmten Grenzwert unterscheiden, das Moment (M), das die Trommel dreht, begrenzt werden kann.

11. Das Anti-Rutsch-System nach einem der vorhergehenden Ansprüche 8 - 10, **dadurch gekennzeichnet, dass** das Mittel, das zum Messen der Wickelgeschwindigkeit oder der Wickellänge verwendet wird, ein Winkelsensor in Verbindung mit der Trommel ist.

12. Das Anti-Rutsch-System nach einem der vorhergehenden Ansprüche 8 - 11, **dadurch gekennzeichnet, dass** die Wickelgeschwindigkeit von dem Stromversorgungskabel und die theoretische Fahrtgeschwindigkeit von dem Ladefahrzeug während einer gewünschten Zeitperiode $\Delta t$, wie etwa beispielsweise 0,5 s, gemessen werden können, um deren Unterschied zu berechnen.

13. Das Anti-Rutsch-System nach einem der vorhergehenden Ansprüche 8 - 12, **dadurch gekennzeichnet, dass** das Moment, das die Trommeln dreht, mit Hilfe des Steuersystems begrenzt werden kann, indem die Drehgeschwindigkeit von dem Elektromotor begrenzt wird, der die Trommeln dreht, oder indem ein Wechselrichter verwendet wird, um den Strom zu begrenzen, mit dem der Elektromotor versorgt wird, der die Trommeln von dem Ladefahrzeug dreht, oder indem Bremsen verwendet werden, um das Moment zu begrenzen, das die Trommeln dreht.

14. Das Anti-Rutsch-System nach einem der vorhergehenden Ansprüche 8 - 13, **dadurch gekennzeichnet, dass** das Moment mit Hilfe von dem Steuersystem von dem Ladefahrzeug begrenzt werden kann.

15. Ein Bergbauladefahrzeug, umfassend ein Anti-Rutsch-System nach einem der vorhergehenden Ansprüche 8 - 14.

**Revendications**

1. Procédé anti-patinage pour une chargeuse électrique, laquelle chargeuse est utilisée en particulier dans les mines et les excavations, et dans lequel la chargeuse destinée à la manipulation de matières rocheuses est équipée d'un câble d'alimentation électrique pour fournir de l'énergie d'un réseau d'alimentation électrique, tel qu'un réseau d'alimentation électrique aménagé dans une mine, à la chargeuse et lequel câble d'alimentation électrique est monté sur une bobine dans la chargeuse,

   **caractérisé en ce que** :

      l'on mesure le mouvement du câble d'alimentation électrique par rapport à la chargeuse et l'on mesure également le mouvement d'une ou plusieurs roues de la chargeuse ou de l'essieu faisant tourner la roue, et l'on convertit les données de mouvement obtenues en mesurant à partir de la roue ou de l'essieu en données de mouvement de la chargeuse, et l'on compare en outre le mouvement mesuré du câble d'alimentation électrique aux données de mouvement de la chargeuse obtenues à partir du mouvement de la roue ou de l'essieu, et, si le mouvement mesuré du câble d'alimentation électrique et les données de mouvement de la chargeuse obtenues en mesurant à partir de la roue ou de l'essieu diffèrent l'un de l'autre de plus d'une valeur limite prédéterminée donnée, on limite le moment (M) qui fait tourner la roue.

2. Procédé selon la revendication 1, **caractérisé en ce que** l'on mesure la vitesse d'enroulement du câble d'alimentation électrique et l'on mesure également la vitesse de rotation ($\omega_{axle}$) d'une ou plusieurs roues de la chargeuse ou de l'essieu qui fait tourner la roue directement ou via une transmission, et l'on convertit la vitesse de rotation mesurée en outre en vitesse d'entraînement théorique ($v_{teor}$) de la chargeuse et l'on compare la vitesse d'enroulement ($v_{reel}$) du câble d'alimentation électrique à la vitesse d'entraînement théorique ($v_{teor}$) mesurée à partir de la vitesse de rotation des roues ou de l'essieu de la chargeuse, et, si la vitesse d'enroulement et la vitesse d'entraînement théorique mesurée à partir de la roue ou de l'essieu diffèrent l'une de l'autre de plus d'une valeur limite prédéterminée donnée, on limite le moment (M) qui fait tourner la roue.

3. Procédé selon la revendication 1 ou 2, **caractérisé en ce que** l'on mesure la longueur d'enroulement ($s_{reel}$) du câble d'alimentation électrique et l'on mesure également l'angle de rotation ($\varphi_{axle}$) d'une ou plusieurs roues de la chargeuse ou de l'essieu qui fait tourner la roue directement ou via une transmission et l'on convertit l'angle de rotation mesuré en outre en distance de déplacement théorique ($s_{teor}$) de la chargeuse et l'on compare la longueur d'enroulement ($s_{reel}$) du câble d'alimentation électrique à la distance de déplacement théorique ($s_{teor}$) et, si la longueur d'enroulement et la distance de déplacement théorique mesurée à partir de la roue ou de l'essieu diffèrent l'une de l'autre de plus d'une valeur limite prédéterminée donnée, on limite le moment (M) qui fait tourner la roue.

4. Procédé anti-patinage selon l'une quelconque des revendications précédentes, **caractérisé en ce que**, lorsque l'on mesure la vitesse d'enroulement ou la longueur d'enroulement, le moyen de mesure utilisé est un capteur d'angle en liaison avec la bobine.

5. Procédé anti-patinage selon l'une quelconque des revendications précédentes, **caractérisé en ce que** le moment qui fait tourner les roues est limité par la limitation de la vitesse de rotation du moteur électrique qui fait tourner les roues directement ou indirectement.

6. Procédé anti-patinage selon l'une quelconque des revendications précédentes, **caractérisé en ce que** le moment qui fait tourner les roues est limité en appliquant un inverseur afin de limiter l'énergie fournie au moteur électrique qui fait tourner les roues de la chargeuse.

7. Procédé anti-patinage selon l'une quelconque des revendications précédentes, **caractérisé en ce que** le moment qui fait tourner les roues est limité par des freins qui décélèrent les roues de la chargeuse.

8. Système anti-patinage, lequel système anti-patinage est agencé pour une chargeuse (1) qui est utilisée en particulier dans les mines et les excavations et qui est alimentée en énergie par un réseau d'alimentation électrique au moyen d'un câble d'alimentation électrique (8) qui peut être enroulé sur une bobine (7) dans la chargeuse, **caractérisé en ce que** :

   le système anti-patinage comprend un moyen (11, 11') pour mesurer le mouvement du câble d'alimentation électrique par rapport à la chargeuse et également pour mesurer le mouvement d'une ou plusieurs roues de la chargeuse ou de l'essieu faisant tourner la roue et on le convertit en données de mouvement de la chargeuse et, en outre, le mouvement mesuré du câble d'alimentation électrique peut être comparé aux données de mouvement de la chargeuse obtenues à partir du mouvement de la roue ou de l'essieu et, si le mouvement mesuré du câble d'alimentation électrique et les données de mouvement de la chargeuse obtenues par mesure à partir de la roue ou de l'essieu diffèrent l'un(e) de l'autre de plus d'une valeur limite prédéterminée donnée, le moment (M) qui fait tourner la roue peut être limité.

9. Système anti-patinage selon la revendication 8, **caractérisé en ce que**, avec le moyen destiné à obtenir les données de mouvement, la vitesse de rotation ($\omega_{axle}$) d'une ou plusieurs roues ou de l'essieu qui fait tourner la roue directement ou via une transmission, peut être mesurée et convertie en vitesse d'entraînement théorique ($v_{teor}$) de la chargeuse, et la vitesse d'enroulement ($v_{reel}$) du câble d'alimentation électrique dans la chargeuse peut être mesurée par au moins un moyen convenant à la mesure de la vitesse d'enroulement, et, si la vitesse d'enroulement et la vitesse d'entraînement théorique ou la longueur d'enroulement et la distance de déplacement théorique diffèrent de plus d'une valeur limite prédéterminée donnée, le moment (M) qui fait tourner la roue peut être limité par le système de commande de la chargeuse pour empêcher un patinage.

10. Système anti-patinage selon l'une quelconque des revendications 8 ou 9, **caractérisé en ce que**, en utilisant le moyen destiné à obtenir les données de mouvement, l'angle ($\varphi_{axle}$) de rotation d'une ou plusieurs roues ou de l'essieu qui fait tourner la roue directement ou via une transmission, peut être mesuré et converti en outre en distance de déplacement théorique ($s_{teor}$) de la chargeuse et la longueur d'enroulement ($s_{reel}$) du câble d'alimentation électrique peut être comparée à la distance de déplacement théorique de la chargeuse mesurée à partir de la roue ou de l'essieu de la chargeuse et, si la longueur d'enroulement et la distance de déplacement théorique ($s_{teor}$) mesurée à partir de la roue ou de l'essieu diffèrent l'une de l'autre de plus d'une valeur limite prédéterminée donnée, le moment (M) qui fait tourner la roue peut être limité.

11. Système anti-patinage selon l'une quelconque des revendications 8 à 10, **caractérisé en ce que** le moyen utilisé pour mesurer la vitesse d'enroulement ou la longueur d'enroulement est un capteur d'angle en liaison avec la bobine.

12. Système anti-patinage selon l'une quelconque des revendications 8 à 11, **caractérisé en ce que** la vitesse d'enroulement du câble d'alimentation électrique et la vitesse d'entraînement théorique de la chargeuse peuvent être mesurées pour calculer leur différence au cours d'une période de temps souhaitée $\Delta t$ telle que, par exemple, 0,5 s.

13. Système anti-patinage selon l'une quelconque des revendications 8 à 12, **caractérisé en ce que** le moment qui fait tourner les roues au moyen du système de commande peut être limité en limitant la vitesse de rotation du moteur électronique qui fait tourner les roues ou en appliquant un inverseur pour limiter l'énergie à fournir au moteur électrique qui fait tourner les roues de la chargeuse ou en appliquant des freins pour limiter le moment qui fait tourner les roues.

14. Système anti-patinage selon l'une quelconque des revendications 8 à 13, **caractérisé en ce que** le moment peut être limité au moyen du système de commande de la chargeuse.

15. Chargeuse d'exploitation minière comprenant un système anti-patinage selon l'une quelconque des revendications 8 à 14.

EP 2 937 467 B1

FIG.1

FIG. 2

FIG.2a

$v_{teor}$

$\omega_{reel}$

$\omega_{wheel}$

$v_{reel}$

$\omega_{wheel}$

"No slip"

$v_{reel} = v_{teor}$

$v_{teor}$

$\omega_{reel}$

$\omega_{wheel}$

$v_{reel}$

$\omega_{wheel}$

"Slip"

$v_{reel} \neq v_{teor}$

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3537452 A